Europäisches Patentamt

European Patent Office

Office européen des brevets

Publication number: **0 265 703 B1**

## EUROPEAN PATENT SPECIFICATION

Date of publication of patent specification: **15.04.92**    Int. Cl.5: **G01B 21/00**, G01B 11/02

Application number: **87114347.5**

Date of filing: **01.10.87**

---

(54) **Method for the automatic inspection of channelled panels.**

---

Priority: **28.10.86 IT 4574786**

Date of publication of application:
**04.05.88 Bulletin 88/18**

Publication of the grant of the patent:
**15.04.92 Bulletin 92/16**

Designated Contracting States:
**AT BE CH DE ES FR GB IT LI LU NL SE**

References cited:
**WO-A-83/00738**
**DE-A- 2 234 213**
**FR-A- 2 570 489**

Proprietor: **ZELTRON - Istituto Zanussi per la Ricerca S.p.A.**
**Via Principe di Udine n. 66**
**Campoformido Udine(IT)**

Inventor: **Monai, Giuliano**
**Via Ippolito Nievo 8**
**I-33042 Buttrio (Udine)(IT)**
Inventor: **Boscolo, Antonio**
**Via Angelo Emo 33/2**
**I-34144 Trieste(IT)**

Representative: **Patentanwälte Grünecker,**
**Kinkeldey, Stockmair & Partner**
**Maximilianstrasse 58**
**W-8000 München 22(DE)**

---

Rank Xerox (UK) Business Services

## Description

The present invention relates to a method for the automatic inspection of a plurality of channelled panels manufactured by the Roll-Bond process or a similar method.

As generally known, channelled panels manufactured by the Roll Bond process are frequently affected by dimensional deviations the acceptability of which is to be verified in a rapid and automatic manner. From Italian Patent Application No. 45717 A/86, filed on April 3, 1986, there is for instance known an automatic machine for measuring the internal volume of the channels in a Roll Bond panel. In particular, this machine is equipped with contour measuring means adapted to scan a portion of each panel to thereby detect a parameter proportional to the width of the channels, and to supply a processor with a signal representative of this parameter. The processor compares this signal to a corresponding reference signal to thereby generate a command signal for controlling a suitable operator device. This machine is suitable for solving the problem of quickly and automatically measuring the volume of the channels in a Roll Bond panel, but is not able to inspect the panels with a view to possible dimensional deviations such as warping or other deformations typically occurring during the laminating process employed during manufacture of such Roll Bond panels. The requisite inspection for geometrical deviations and the finishing operations on the channelled panels are usually carried out manually. In particular, the inspection of the channelled panels with regard to dimensional deviations is carried out by a manual operation using calipers or the like, resulting in an undesirable time-consuming and troublesome process.

FR-A-25 70 489 describes a similar measuring method for glass panels instead of Roll Bond panels.

It is an object of the present invention to provide a method for the automatic inspection of channelled panels to thereby rapidly and accurately verify the acceptability of any dimensional deviations of such panels.

The invention as claimed provides for an accurate measurement of any dimensional deviations. Preferred embodiments are referred to in the subclaims.

The command signal may be used in the most suitable manner for verifying whether the dimensions of the panels lie within predetermined tolerances and/or for controlling suitable operator devices.

The characteristics and advantages of the invention will become more clearly evident from the following description, given by way of example with reference to the accompanying drawings, wherein:

fig 1.     shows a front view of a channelled panel suitable for being inspected by the method according to the invention,

fig. 2     shows a diagrammatic sideview of the panel of fig. 1 as aligned in an inspection station,

figs 3 and 4     show diagrammatic part sectional views for explaining the relationship between cross-sections taken along respective lines III-III and IV-IV in fig. 1, and corresponding signals generated in the course of the method according to the invention, and

fig. 5     shows a diagrammatic top plan view of a deformed channelled panel when subjected to the inspection method according to the invention.

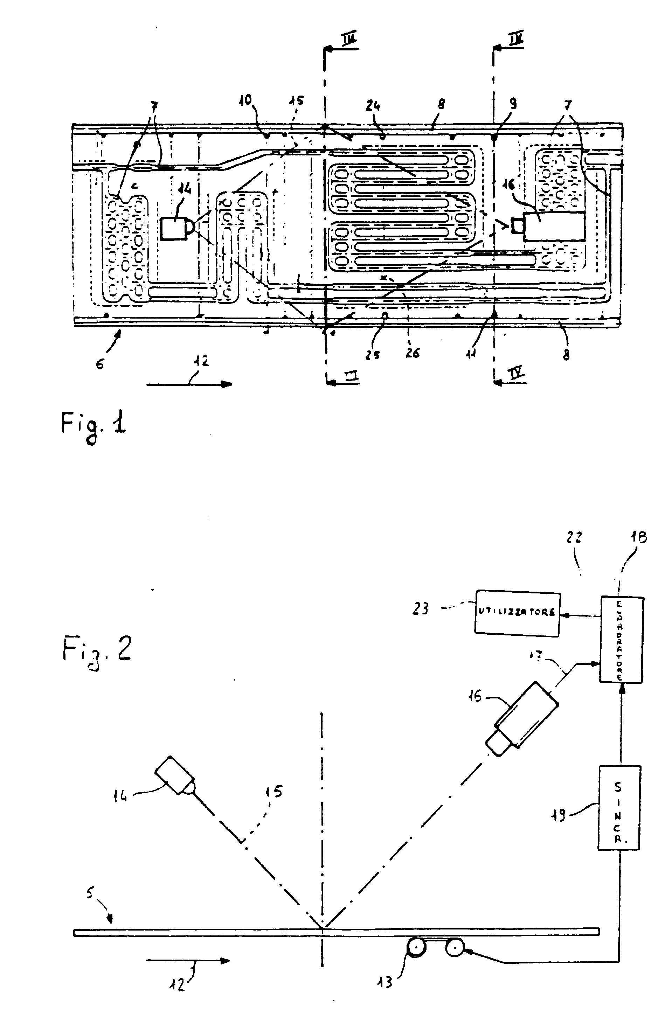

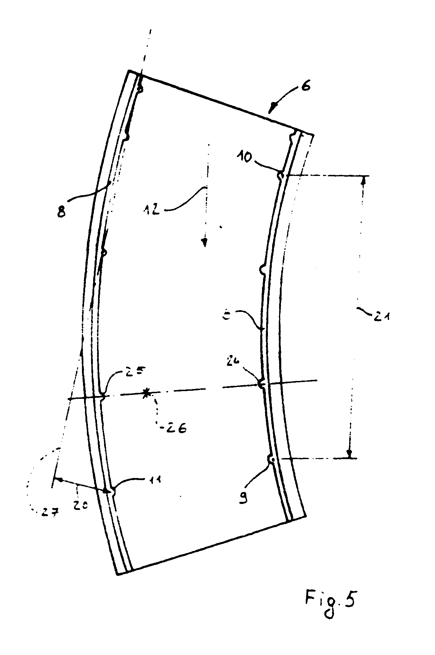

With reference to fig. 1, the present invention is based on the consideration that the Roll Bond process or a similar process for manufacturing channelled panels 6 involves at least one laminating step which may result in dimensional deviations in the laminating direction, whereas deformations in a direction perpendicular thereto are practically excluded. These considerations are valid even in the case of "warping" of panel 6 (as shown in fig. 5, wherein the internal channels have been omitted for simplification), inasmuch as this deformation is characterized by a translocation or rotation of the structure as a whole. Any deformation of a marginal area of the panel is thus indicative of a corresponding deformation of the cross-sectional configuration as a whole.

As generally known, each panel 6 manufactured by the Roll Bond method using an aluminum sheet material has a substantially planar and rectangular configuration and is provided with a system of internal channels generally indicated at 7 in fig. 1.

Panel 6 is further provided with a stiffening channel 8 extending substantially around its periphery and destined to be subsequently removed (as by means of plate shears) for reducing the panel to the desired size.

In particular, channels 7 and 8 are usually formed by the expansion of a solder-resistant material applied to the internal surfaces of the panel in a suitable pattern prior to the laminating step.

According to one aspect of the invention, each panel is provided with at least a first, a second, and a third marking 9, 10 and 11, respectively, prior to the laminating step, and preferably when the solder-resistant material is applied.

Markings 9, 10, 11 are preferably of semicircular or a similar shape and formed adjacent stiffening channels 8.

First and second markings 9 and 10 are aligned at a predetermined distance in the direction (indicated by arrow 12) in which panel 6 is subsequently to be subjected to the laminating procedure in the conventional manner.

Third marking 11 is preferably disposed adjacent the opposite border of the panel in alignment with first or second marking 9 or 10 in a direction substantially perpendicular to laminating direction 12.

In the example shown, third marking 11 is thus aligned with first marking 9.

With reference also to fig. 2, a number of channelled panels 6 manufactured as described on an industrial scale and having the same basic configuration is successfully advanced by means of a conveyor generally indicated at 13 through an inspection station equipped with means for detecting markings 9, 10 and 11.

These detecting means preferably comprise a light source 14 (for instance a neon lamp) adapted to emit a collimated light radiation 15 directed onto the panels so as to be reflected thereby towards a telecamera 16 when incident on a planar portion of the aluminum panel 6.

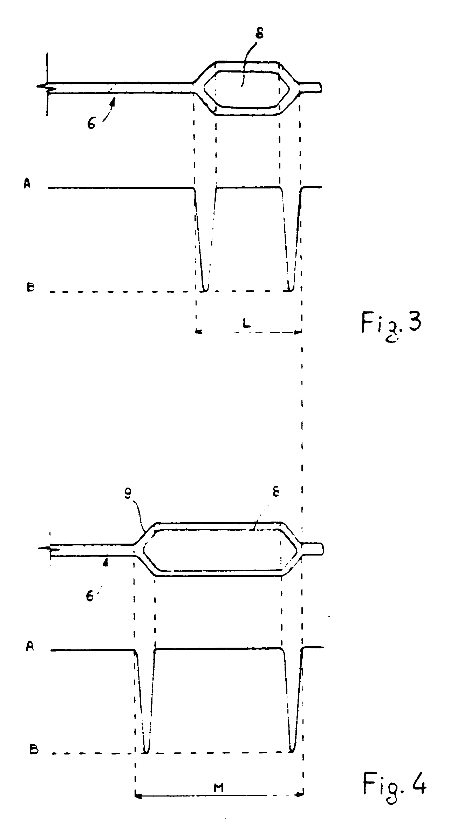

Telecamera 16 may be of the linear scanning type adapted to scan the panels substantially transversely of the laminating direction 12 to thereby generate at its output terminal 17 a video control signal indicative of the configuration of panel 6 with reference to the main plane thereof. As will be explained below with reference to figs. 3 and 4, the control signal is representative of the actual position of markings 9, 10 and 11 on panels 6 also in the case of any dimensional deviations due to the laminating process.

Output 17 of telecamera 16 is applied to a processing stage 18 of the type for instance comprising a central processing unit 68020 sold by Motorola Inc..

In a per se known manner, processor 18 stores a reference signal representative of hte ideal geometric position of markings 9, 10 and 11 on a reference master panel 6. A synchronizing unit 19 controls the operation of processor 18 in synchronism with conveyor means 13, so that each scanning operation carried out by telecamera 16 is correlated to a corresponding transverse section of the inspected panel 6.

The correlation for instance of section III-III in fig. 1 with the corresponding control signal is diagrammatically shown in fig. 3, which is for simplicity's sake restricted to only a narrow marginal area of panel 6 including a stiffening channel 8 along which markings 9 and 10 are located. From fig. 3 it is evident that the control signal is at a predetermined level A in correspondence to those portions of section III-III, whereas panel 6 is substantially planar, because the light radiation 15 is reflected towards telecamera 16.

The intensity of the light radiation received by telecamera 16 (and thus the level of the control signal) shows an abrupt drop to a level B in correspondence to the inclined boundaries of channel 8. The section L of the control signal is therefore representative of the width of channel 8 adjacent section III-III of panel 6.

These considerations are obviously valid for the entirety of the control signal generated by telecamera 16 and representative of section III-III, with particular reference to the opposite stiffening channel 8 whereat third marking 11 is located. It is to be noted, however, that in view of the above discussed considerations it would be sufficient for processor 18, the operation of which is per se known and does not form part of the invention, to process only those video signals (those received from telecamera 16 and those stored) associated to the most significant portions of the respective sections of panel 6. in particular to stiffening channels 8 and markings 9, 10 and 11. In this manner it would be possible to process the informations required for the inspection method according to the invention at a considerable speed, to result in a high productivity satisfying the requirements of its application on an industrial scale.

By storing in a per se known manner a succession of scanning signals similar to the one shown in fig. 3, processor 18 is thus capable of revealing the position and width of stiffening channels 8.

When telecamera 16 scans the section IV-IV shown in fig. 1, the corresponding control signal applied to processor 18 has the configuration shown in fig. 4, this figure being again limited to a marginal area of panel 6 including stiffening channel 8 and first marking 9.

As evident from comparing fig. 3 to fig. 4, the position of marking 9 is recognizable by processor 18, because the distance between the signal flanks corresponding to inclined areas of panel 6 has increased to a value M>L. The same applies to the recognition of opposite marking 11 and of longitudinally aligned marking 10.

Processor 18 is adapted to compare the control signal generated by telecamera 16 (and including a succession of scanning signals similar to the ones shown in figs. 3 and 4) to a stored reference signal (representative of the ideal geometric position of markings 9, 10 and 11 on a reference master panel 6).

In particular, as a result of the synchronized operation of conveyor means 13 and processor 18, the latter is able to recognize whether markings 9 and 11 are properly aligned and whether markings 9 and 10 are longitudinally aligned at the proper distance on the inspected channelled panel 6 (which may for instance be "warped" in the manner depicted in fig. 5). When suitably programmed in a manner familiar to one skilled in the art, processor 18 is capable of using the informations contained in the control signal and in the reference signal for calculating the magnitude of any deflection of the panel 6 and the vectoral distances between the most significant points. In fig. 5 the magnitude of deflection of marking 11 and the vectoral distance between markings 9 and 10 are indicated respectively by double arrows 20 and 21. Double arrow 20 is calculated for instance with respect to an axis 27 passing through two theoretically aligned markings.

In response to the comparison of the control signal to the reference signal processor 18 is adapted to generate at its output terminal 22 (fig. 2) a command signal representative of the geometric deviation of each channelled panel 6 from a reference master panel. This command signal is for instance a digital numeric signal containing the necessary information for controlling a suitable operator device 23.

Operator device 23 may for instance comprise automatic handling means for discarding panels 6 identified by the command signal as not lying within the acceptable tolerance.

Alternatively or additionally operator device 23 may comprise per se known means operable in response to the informations contained in the command signal to position and align panels 6 in a shear machine itself operable to remove stiffening channels 8 and to cut panel 6 to the desired size without affecting channels 7.

The described example represents the most elementary embodiment of the inspection method according to the invention, in which there are only three markings 9, 10 and 11 required for defining the plane in which each channelled panel 6 extends.

In practice it is advisable, however, to employ a greater number of markings (as shown in figs. 1 and 5) for rendering the detection of the shape of the channelled panels more accurate. In particular it is preferred, prior to the laminating step, to provide at least one pair of further markings 24, 25 aligned on opposite sides of each channelled panel in a direction passing through at least one reference point 26 on a central area of the panel. This reference point 26 may conveniently represent a "critical" area of each panel 6, any geometric displacement of which it would be particularly important to reveal before the panel is cut to size and/or the finished panel is deformed by bending. Point 26 may thus correspond to a location whereat the channelled panel 6 is subsequently to be bent, cut or mounted.

In a similar manner as described above, processor 18 may be operable in response to the comparison of the control signal to the reference signal to generate a command signal additionally containing informations indicative of the geometric coordinates of reference point or points 26.

The informations representative of the geometric characteristics of the channelled panel 6 as a whole may advantageously be correlated to reference point 26.

The total number of markings 9, 10, 11 and 24, 25 as well as the corresponding synchronization of conveyor means 13 are obviously to be determined as compromise values between a minimum capable of ensuring sufficient accuracy in the reconstruction of the geometric shape of each panel 6, and a maximum admissible for a sufficiently speedy processing of the signals by telecamera 16 and processor 18. In any case it is evident that the scanning only of limited areas of the channelled panels 6 permits the inspection thereof to be carried out in an automatic manner and at a greater speed than by the prior art method, and also by comparison to other possible methods employing an image of the total area of each panel and the comparison thereof to a reference image by the so-called image substraction process.

It is to be understood that the described inspection method may undergo numerous modifications within the scope of the invention and based on the principle - as also experimentally verified - that any localized deformations at the sides of a panel 6 are representative in close approximation to the state of deformation of the channelled panel as a whole.

Markings 9-11 and 24, 25 may for instance have a different shape suitable for the purpose, and/or may be disposed at different locations on the panels 6, for instance adjacent the internal channels 7 or other significant areas.

The means for detecting the markings may also be of a different type, as for instance described in the above cited patent application no. 45717 A/86, or may include a telecamera 16 of the matrix type.

In the latter case the conveyor means 13 may be of a type adapted to advance the panels 6 to the inspection station at a variable speed to permit their being inspected in accordance with the functional characteristics of the telecamera 16.

The processor 18 should of course be operable to process only those signal portions relating to the most significant areas of the panels 6, as already explained.

The considerations set forth above are also valid, with suitable modifications, when the channelled panels 6 are manufactured and advanced to the inspection station in the form of coherent groups including a plurality of panels interconnected along their edges in a plqanar array, which are subsequently to be separated in a per se known manner. It is further to be noted that the program for processing the signals carried out by processor 18 may be of any suitable type for the stated purpose and does not constitute part of the invention, as already explained.

## Claims

1. A method for the automatic inspection of channelled panels manufactured by a process involving at least one laminating step, in which at least a part of each panel (6) is scanned by means of a scanning apparatus (14-16) after the laminating step, **characterized by** further comprising the steps of:

   providing on each panel (6), prior to said laminating step, at least one first and one second marking (9,10) aligned at a predetermined distance along the laminating direction (12), and at least one third marking (11) aligned with one of said first and second markings in a direction substantially perpendicular to said laminating direction, said scanning apparatus (14-16) being responsive to said markings for generating a control signal representative of the geometric position of said markings,

   comparing said control signal to a corresponding reference signal representative of the ideal geometric position of said markings,

   generating in response to said comparing step a command signal representative of any geometric deviation of each panel (6) after said laminating step from the shape of a reference master panel, and

   applying said command signal to an operator device (23).

2. A method according to claim 1, characterized in that the inspection of each panel (6) by said scanning apparatus (14-16) is carried out by scanning substantially transversely of a direction coincident with the laminating direction (12) and in which said panel is advanced in synchronism relative to said scanning apparatus.

3. A method according to claim 1, characterized in that said markings (9-11) are provided adjacent channels (7) formed in each panel (6),

4. A method according to claim 1, wherein each panel is formed with lateral stiffening channels to be removed after said laminating step, characterized in that said markings (9-11) are provided adjacent said stiffening channels (8).

## Revendications

1. Procédé pour l'inspection automatique de panneaux à canaux intégrés fabriqués par un procédé impliquant au moins un stade de doublage par laminage, dans lequel au moins une partie de chaque panneau (6) est balayée au moyen d'un appareil de balayage (14-16) après le stade de doublage par laminage, caractérisé en ce qu'il comporte également les stades suivants :

   - procurer sur chaque panneau (6), avant ce stade de doublage par laminage, au moins un premier et un deuxième repère (9,10) alignés à une distance prédéterminée l'un de l'autre dans le sens du laminage (12), et au moins un troisième repère (11) aligné avec l'un des premier et deuxième repères dans une direction pratiquement perpendiculaire à cette direction du laminage, cet appareil de balayage (14-16) répondant aux repères pour produire un signal de commande représentatif de la position géométrique des repères;

   - comparer le signal de commande à un signal de référence correspondant représentatif de la position géométrique idéale de ces repères;

   - produire en réponse à ce stade de comparaison un signal de commande représentatif de tout écart géométrique de chaque panneau (6) après le stade de doublage par laminage, écart par rapport à la forme d'un maître panneau de référence; et

   - appliquer ce signal de commande à un dispositif opérationnel (23).

2. Procédé selon la revendication 1, caractérisé en ce que l'inspection de chaque panneau (6) par l'appareil de balayage (14-16) est effectué par un balayage sensiblement perpendiculaire à une direction coïncidant avec la direction de laminage (12), le panneau étant avancé en synchronisme avec l'appareil de balayage.

3. Procédé selon la revendication 1, caractérisé en ce que les repères (9-11) sont prévus adjacents aux canaux (7) formés dans chaque panneau (6).

4. Procédé selon la revendication 1, dans lequel chaque panneau comporte des canaux de raidissement latéraux à enlever après ce stade de laminage, caractérisé en ce que les repères (9-11) sont prévus adjacents à ces canaux de raidissement (8).

der entfernt werden, dadurch gekennzeichnet, daß die Markierungen (9-11) neben den versteifenden Kanälen (8) vorgesehen sind.

**Patentansprüche**

1. Verfahren zur automatischen Untersuchung von mit Kanälen versehenen Blechtafeln, die durch ein Verfahren hergestellt werden, das wenigstens einen Laminierungsschritt enthält, bei dem wenigstens ein Teil jeder Blechtafel (6) durch ein Abtastgerät (14-16) nach dem Laminierungsschritt abgetastet wird; dadurch gekennzeichnet, daß das Verfahren weiterhin folgende Schritte enthält:
Vorsehen wenigstens einer ersten und einer zweiten Markierung (9, 10) auf jeder Blechtafel (6) vor dem Laminierungsschritt, wobei die Markierungen in vorbestimmten Abstand entlang der Laminierungsrichtung axial ausgerichtet sind, und wenigstens einer dritten Markierung (11), die mit einer der ersten und zweiten Markierungen in einer Richtung im wesentlichen senkrecht zur Laminierungsrichtung ausgerichtet ist, wobei die Abtastvorrichtung (14-16) auf die Markierungen zur Erzeugung eines Kontrollsignals anspricht, das repräsentativ ist für die geometrische Position der Markierungen,
Vergleichen des Kontrollsignals mit einem entsprechenden Referenzsignal, das repräsentativ ist für die ideale geometrische Position der Markierungen,
Erzeugung einer Führungsgröße in Reaktion auf den Vergleichsschritt, wobei die Führungsgröße repräsentativ ist für jegliche geometrische Abweichungen jeder Blechtafel (6) nach dem Laminierungsschritt von der Form einer Referenzhauptblechtafel, und
Zuführen der Führungsgröße an ein Betriebsgerät (23).

2. Verfahren nach Anspruch 1, dadurch gekennzeichnet, daß die Überprüfung jeder Blechtafel (6) durch die Abtastvorrichtung (14-16) im wesentlichen durch ein Abtasten quer zur Richtung, die gleich ist der Laminierungsrichtung (12), ausgeführt wird, und wobei die Blechtafel synchron relativ zu der Abtastvorrichtung weiterbewegt wird.

3. Verfahren nach Anspruch 1, dadurch gekennzeichnet, daß die Markierungen (9-11) neben den Kanälen (7), die in jeder Blechtafel (6) ausgebildet sind, angebracht werden.

4. Verfahren nach Anspruch 1, wobei jede Blechtafel mit lateral versteifenden Kanälen versehen ist, die nach dem Laminierungsschritt wie-

EP 0 265 703 B1

Fig. 1

Fig. 2

UTILIZZATORE

ELABORATORE

SINCR.

7

Fig. 3

Fig. 4

Fig. 5